Europäisches Patentamt

European Patent Office

Office européen des brevets

(11) Publication number: **0 566 936 B1**

# EUROPEAN PATENT SPECIFICATION

(45) Date of publication of patent specification: **06.12.95**

(21) Application number: **93105815.0**

(22) Date of filing: **08.04.93**

(51) Int. Cl.⁶: **C09D 183/04**, C04B 26/32, C04B 28/02, C09D 5/14, //C09D5/14,(C04B26/32,14:04, 24:36,24:42),(C04B28/02,14:04, 24:36,24:42)

(54) **Aquatic antifouling mortar composition.**

(30) Priority: **09.04.92 JP 117010/92**

(43) Date of publication of application:
**27.10.93 Bulletin 93/43**

(45) Publication of the grant of the patent:
**06.12.95 Bulletin 95/49**

(84) Designated Contracting States:
**DE FR GB IT**

(56) References cited:
**EP-A- 0 089 071
WO-A-92/00357
US-A- 3 451 833
US-A- 4 231 917**

**DATABASE WPI Week 8327, Derwent Publications Ltd., London, GB; AN 83-703522**

**PATENT ABSTRACTS OF JAPAN vol. 11, no. 290 (C-447)(2737) 18 September 1987**

(73) Proprietor: **Dow Corning Toray Silicone Company, Limited
Mitsui Bldg. No. 6,
2-3-16, Nihonbashi-Muromachi,
Chuo-Ku
Tokyo 103 (JP)**

(72) Inventor: **Demura, Katsunori, Res. and Devl
Dept., Toray Dow
Corning Silicone Co., Ltd.,
2-2, Chigusa Kaigan
Ichihara-shi,
Chiba Prefecture (JP)**
Inventor: **Motomura, Hideyuki, Res. and Devl
Dept., Toray Dow
Corning Silicone Co., Ltd.,
2-2, Chigusa Kaigan
Ichihara-shi,
Chiba Prefecture (JP)**

DATABASE WPIL Week 8520, 10 July 1985 Derwent Publications Ltd., London, GB; AN 85-119705

DATABASE WPIL Week 9151, 26 February 1992 Derwent Publications Ltd., London, GB; AN 91-373970

Inventor: **Murakami, Ichiro, Res. and Devl Dept., Toray Dow Corning Silicone Co., Ltd., 2-2, Chigusa Kaigan Ichihara-shi, Chiba Prefecture (JP)**
Inventor: **Ohama, Yoshihiko, Res. and Devl Dept., Toray Dow Corning Silicone Co., Ltd., 2-2, Chigusa Kaigan Ichihara-shi, Chiba Prefecture (JP)**

(74) Representative: **Spott, Gottfried, Dr. Spott, Weinmiller & Partner Sendlinger-Tor-Platz 11 D-80336 München (DE)**

**Description**

The present invention relates generally to mortar compositions and more specifically to a mortar composition which is adapted for use in a marine environment and which has antifouling characteristics.

Underwater structures such as water pipes in power stations and port facilities lose their performance upon adhesion of shells, algae, etc., on the surface. Great effort and expense have been spent for removal and treatment of such aquatic life. There have been many proposals of methods for prevention of adhesion of such aquatic life. For example, in Japanese Kokoku Patent No. Sho 63[1988]-2995, antifouling coating compositions from room temperature-curable silicone rubber compositions, liquid paraffins, and silicone oils are coated on underwater structures such as ships, port facilities, fish farm nets, etc., to prevent adhesion of aquatic life. Similarly, in Japanese Kokai Patent Application No. Sho 62[1987]-252480, antifouling coating compositions from room temperature-curable silicone rubber compositions and hydroxy group-containing silicone resins are coated on underwater structures for prevention of adhesion and growth of aquatic life.

However, when such antifouling coating compositions are used on underwater structures of concrete or mortar, such as water pipes of power stations, numerous drawbacks are encountered. Namely, such antifouling coating compositions have the fatal flaw of poor adhesion to concrete or mortar surfaces. Thus, when such coating materials are applied to a concrete or mortar surface, the surface to be coated should be first coated with an organic resin such as epoxy resin, etc., followed by a coating with the antifouling coating compositions. This is a cumbersome process, with disadvantages in terms of workability and cost. In addition, the fact that such anti fouling coating compositions cannot be applied to wet surfaces of underwater structures is a serious problem.

The drawbacks of the prior art have been overcome by the composition of the present invention. In accordance therewith an aquatic mortar composition is provided that uses room temperature-curable organopolysiloxane compositions as the binder. The mortar itself displays excellent aquatic antifouling properties after curing so that the need for subsequently coating the composition with an antifouling coating is eliminated.

The aquatic mortar composition of the invention comprises:

(A) 100 parts by weight of a room temperature-curable organopolysiloxane composition containing (a) an organopolysiloxane containing silanol groups or silicon atom-bonded hydrolyzable groups and (b) an organosilicon compound containing silicon atom-bonded hydrolyzable groups, as main components and, if needed, a condensation-accelerating catalyst;

(B) 200-800 parts by weight of sand;

(C) 30-300 parts by weight of an inorganic filler;

(D) 5-50 parts by weight of an organic oil which is not compatible with the component (A);

(E) 5-50 parts by weight of an organopolysiloxane oil not containing silanol groups or silicon atom-bonded hydrolyzable groups; and

(F) 0-20 parts by weight of water.

It is therefore an object of the present invention to provide aquatic antifouling mortar compositions that are room temperature-curable and that inhibit the adhesion and growth of aquatic life forms thereon.

It is another object of the present invention to provide a material useful for the construction of underwater structures and which material need not be first coated with an epoxy material and secondly with an antifouling coating in order to exhibit marine antifouling characteristics.

In the aquatic antifouling mortar composition of the invention, room temperature-curable organopolysiloxane compositions, component (A), are used to bind sand, component (B), and inorganic filler, component (C).

The room temperature-curable organopolysiloxane compositions of component (A) comprise mainly (a) organopolysiloxanes containing silanol groups and silicon atom-bonded hydrolyzable groups and (b) organosilicon compounds having silicon atom-bonded hydrolyzable groups. Upon exposure to moisture, the organopolysiloxanes (a) and organosilicon compounds (b) of component (A) undergo crosslinking by a condensation reaction. The condensation reaction may be carried out with the aid of a condensation-accelerating catalyst. The end result of the condensation reaction is, however, a solid cross-linked network, generally referred to as a resin.

The organopolysiloxanes (a) of component (A) may include, for example, dimethylpolysiloxanes blocked by silanol groups at both ends, dimethylpolysiloxanes blocked by a silanol group at one end and trimethylsiloxy group at the other end, dimethylpolysiloxanes blocked by methyldimethoxysiloxy groups at both ends, or combinations thereof.

The organosilicon compounds (b) of component (A) may include, for example, methyltris(methyl ethyl ketoxime)silane, vinyltris(methyl ethyl ketoxime)silane, tetrakis(methyl ethyl ketoxime)silane, methyltrimethoxysilane, tetraethoxysilane, methyltris(N,N-diethylamino)silane, their hydrolyzates and combinations thereof. The amount of compound (b) used with respect to 100 parts by weight of the compound (a), is 1-20 parts by weight, preferably 2-10 parts by weight.

Condensation-accelerating catalysts may be used to augment the reaction between compounds (a) and (b) of component (A). Examples of the same include organometallic catalysts such as dibutyltin diacetate, dibutyltin dioctoate, dibutyltin dilaurate, dioctyltin dilaurate, zinc naphthenate, cobalt naphthenate, tin octoate, cobalt octoate, zirconium naphthenate and tetrabutyl orthotitanate. Other well-known catalysts may also be employed such as amine catalysts free from organosilicon compounds, including diethanolamine and triethanolamine. The amount of the condensation-accelerating catalysts used to 100 parts by weight of the sum of component (A) is usually 0.1-10 parts by weight, preferably 0.1-2 parts by weight.

The room temperature-curable organosiloxane composition (A) may also contain various known additives such as methylpolysiloxane resins comprising $(CH_3)SiO_{3/2}$ units, methylpolysiloxane resins comprising $(CH_3)_3SiO_{1/2}$ units and $SiO_{4/2}$ units, and various silane couplers.

Component (B), the sand used in the present invention, is an aggregate, imparting high strength and hardness to the mortar to be formed. The sand that can be used may be chosen from conventional sand used for cement mortars and concretes. Such sand may be silica sand, powdered sand, artificial lightweight aggregates, etc. The amount of sand, component (B), added to 100 parts by weight of component (A) is 200-800 parts by weight, preferably 300-500 parts by weight.

The inorganic fillers used as component (C) in the present invention impart strength and compactness to the mortars to be formed and play the role of improving workability and binder extension. Such inorganic fillers are mainly calcium carbonate, finely powdered silica, cement, kieselguhr, etc. Especially when cement is used as the inorganic filler, the compositions of the present invention show enhanced adhesive properties to wet surfaces. The amount of this component added to 100 parts by weight of the room temperature-curable silicone compositions (A) is 30-300 parts by weight, preferably 50-150 parts by weight.

The organic oils used as component (D) in the present invention enhance the aquatic antifouling properties of mortar. It is necessary that such organic oils are not compatible with the room temperature-curable organopolysiloxane compositions used as component (A). Such compounds include, for example, petrolatum, chlorinated paraffins and liquid paraffins. With too small a content of component (D), the prevention of adhesion of aquatic life is not sufficient, while with too much, mortar strength suffers. Thus, the content of component (D), based on 100 parts by weight of component (A), should be 5-50 parts by weight, preferably 5-30 parts by weight.

The organopolysiloxane oils used as component (E) in the present invention play the role of enhancing the aquatic antifouling properties, in a manner similar to component (D). It is necessary that such organopolysiloxanes of component (E) do not react with the constitutional components of the room temperature-curable polysiloxanes of component (A). Thus component (E) should not contain any silanol or hydrolyzable groups. Examples of organopolysiloxanes suitable for use as component (E) include trimethylsiloxy-blocked dimethylpolysiloxanes, dimethylsiloxanemethylphenylsiloxane copolymers, dimethylsiloxanediphenylsiloxane copolymers, 3,3,3-trifluoropropylmethylsiloxane-dimethylsiloxane copolymers, polyether-modified dimethylpolysiloxanes, and combinations thereof.

With too small a content of component (E), the prevention of adhesion of aquatic life is not sufficient, while with too much, mortar strength suffers. Thus, the content of component (E), based on 100 parts by weight of component (A), should be 5-50 parts by weight, preferably 5-30 parts by weight.

The water used as component (F) in the present invention is added if needed for deep curing of mortars formed. The addition of water may not be necessary if moisture accompanies components (B) and/or (C). The amount of water, component (E), added to 100 parts by weight of component (A) should be 0-20 parts by weight, preferably 1-15 parts by weight.

The mortar compositions of the present invention can be prepared readily by simple mixing of components (A)-(E) or (A)-(F). After mixing, and in the presence of water (i.e. supplied as component (F) or through some other source), the compositions cure and harden. The hardened mortar has antifouling characteristics that prevents the adhesion and growth of aquatic life thereon. Thus, the mortar compositions of the present invention are useful for water pipes in power plants and underwater structures such as coastal walls.

## Examples

The mortar compositions of the present invention are more fully explained below in connection with application and reference examples. In the examples that follow, parts are by weight, and viscosity values are for $mm^2/s$ (centistokes) (Cst) measured at 25°C. Flexural strength, bending, hardness, and aquatic fouling were measured by the methods given below. In some instance Japanese Industrial Standards ("JIS") were applied. English translations of JIS have been published by the Japanese Standards Association and are readily available.

Bending Strength

Bending strength was measured on samples prepared in accordance with Japanese Industrial Standard JIS A1171 (Method of Making Test Sample of Polymer-Modified Mortar in the Laboratory.) JIS A1171 references JIS R5201, entitled Physical Testing Methods of Cement, as the applicable standard for testing the specimens, each of which is incorporated herein by reference. The test used an Instron universal tester, with a crosshead speed 0.5 mm/min.

Hardness

Hardness was measured in accordance with Japanese Industrial Standard JIS K6301 (Physical Testing Methods for Vulcanized Rubber,) also incorporated herein by reference. Sec. 5 of JIS K6301 describes harness testing in detail. The hardness measurements taken on the mortar of the invention reported herein were carried out using a spring-loaded type A hardness tester, as described in Sec. 5.

Aquatic Fouling

Samples in accordance with the application and reference examples were exposed to seawater by immersion at Iwaki City, Fukushima Prefecture for 3, 6 and 12 months. After each period, the weight change (wt%) of the sample was measured and used as a measure for fouling.

Reference Example 1

Three silanol-blocked dimethylpolysiloxanes of different viscosities, 2 silanes with different hydrolyzable groups, and dibutyltin diacetate, a condensation-accelerating catalyst, were mixed in the absence of moisture to obtain 5 room temperature-curable organopolysiloxane compositions I - V, as shown in Table I.

Application Example 1

In a beaker were mixed uniformly 100 parts of the room temperature-curable organopolysiloxane composition I obtained in Reference Example 1 and 20 parts of liquid paraffin, then 120 parts of the resulting mixture were further mixed uniformly with 90 parts of calcium bicarbonate (particle diameter $<10^{-3}$ mm, specific gravity 2.7), 160 parts of No. 4 silica sand (particle diameter 0.7-1.17 mm), and 240 parts of No. 7 silica sand (particle diameter 0.05-0.21 mm), followed by mixing with 25 parts of trimethylsiloxy-blocked dimethylpolysiloxane of viscosity 1000 mm$^2$/s (cSt) and 7.5 parts of water to give an aquatic antifouling mortar composition as a paste. Then, this composition was cast into a wooden frame of dimensions 40 x 40 x 160 mm and dried and cured at room temperature (20°C, 50 RH%) for 7 days to obtain specimens for physical property measurements. The specimens obtained were measured for flexural strength, bending, and hardness. Measurement results are given in Table II.

The composition was also cast in a wooden frame of dimensions 150 x 300 x 10 mm and dried and cured at room temperature (20°C, 50 RH%) for 7 days to obtain specimens for seawater immersion test. For enhanced strength, a crimped metal net of opening 15 mm and wire diameter 1.5 mm in accordance with JIS G3553 (Crimped Wire Cloth), also incorporated herein by reference, was cut to 140 x 280 mm and embedded in the specimens. The specimens were immersed in seawater for 1 year at Iwaki City, Fukushima Prefecture, showing no adhesion of aquatic life to the specimen surface. Results of measurements of weight changes after 3, 6, and 12 months are given in Table IV. These measurements showed excellent aquatic antifouling performances of the cured products of the compositions of the present invention.

Application Examples 2-5

Similarly as in Application Example 1, mortar compositions of Table III were prepared. The polysiloxanes of Table III were those blocked by trimethylsiloxy groups at both ends. The seawater immersion test specimens made from these compositions were measured for physical properties and aquatic antifouling performances similarly as in Application Example 1. Results are given in Tables II and IV, showing excellent aquatic anti fouling performances by the cured products of the compositions of the present invention.

Application Example 6

Application Example 1 was repeated using Portland cement in place of calcium carbonate to obtain aquatic antifouling mortar compositions as pastes. Seawater immersion test specimens were prepared similarly as in Application Example 1 and tested for aquatic antifouling properties similarly as in Application Example 1, showing no adhesion of aquatic life on the specimen surfaces. The composition was also coated on wet concrete molding surface and cured at room temperature for 7 days, showing strong adhesion between the concrete molding and cured mortar.

Comparative Example 1

A cement mortar composition was prepared from 400 parts of Portland cement, 1200 parts of Toyoura standard sand, and 308 parts of water and made into seawater immersion test specimens similarly as in Application Example 1 and measured for aquatic antifouling properties similarly as in Application Example 1, showing the entire surface covered by acorn barnacles, rhytidiaceae, shiroitogokai, etc. Weight change measurement results are given in Table IV.

Table I

| Specimens<br>Composition (parts) | Room temperature-curable organopolysiloxane compositions | | | | |
|---|---|---|---|---|---|
| | I | II | III | IV | V |
| Dimethylpolysiloxane blocked by silanol at both ends | | | | | |
| Viscosity (mm$^2$/s) 80(cSt) | | 50 | | | |
| Viscosity (mm$^2$/s) 2000(cSt) | 100 | 50 | 75 | 75 | 75 |
| Viscosity (mm$^2$/s) 12000(cSt) | | | 25 | 25 | 25 |
| Methyltris(methyl ethyl ketoxime)silane | 5 | 10 | 5 | | 5 |
| Methyltriacetoxysilane | | | | 5 | |
| Dibutyltin diacetate | 0.5 | 0.5 | 0.5 | 0.5 | 0.5 |

Table II

| Classification<br>Physical characteristics | Application Example | | | | |
|---|---|---|---|---|---|
| | 1 | 2 | 3 | 4 | 5 |
| Flexural strength | 6 | 4 | 4 | 4 | 1 |
| Bending flexure | 15 | 10 | 16 | 15 | 9 |
| Hardness | 51 | 44 | 39 | 38 | 19 |

Table III

| Classification Composition (parts) | Application Example | | | | |
|---|---|---|---|---|---|
| | 1 | 2 | 3 | 4 | 5 |
| Organopolysiloxane composition I | 100 | | | | |
| II | | 100 | | | |
| III | | | 100 | | |
| IV | | | | 100 | |
| V | | | | | 100 |
| Silica sand No. 4 | 160 | 160 | 160 | 160 | 160 |
| Silica sand No. 7 | 240 | 240 | 240 | 240 | 40 |
| Calcium bicarbonate | 90 | 90 | 90 | 90 | 90 |
| Liquid paraffin | 20 | 20 | 20 | 20 | 20 |
| Dimethylpolysiloxane Viscosity ($mm^2/s$) 1000(cSt) | 25 | 25 | | | |
| 100(cSt) | | | 25 | | |
| Methylphenylpolysiloxane Viscosity 100$mm^2/s$(cSt) | | | | 25 | |
| SH3771[1] | | | | | 5 |
| Water | 7.5 | 7.5 | 7.5 | 7.5 | 7.5 |

1) Polyether-modified dimethylpolysiloxane of viscosity 360$mm^2/s$ (cSt) (product of Toray Dow-Corning Silicone Co., Ltd.)

Table IV

| Classification Duration of immersion in months | Application Examples | | | | | Comparative Example |
|---|---|---|---|---|---|---|
| | 1 | 2 | 3 | 4 | 5 | 1 |
| 3 | 1 | 1 | 1 | 1 | 1 | 8 |
| 6 | 1 | 2 | 3 | 2 | 1 | 10 |
| 12 | 2 | 2 | 3 | 2 | 3 | 32 |

Note: In tables, the unit for the numerical values is $wt\%$.

Claims

1. An aquatic antifouling mortar composition comprising:
   (A) 100 parts by weight of a room temperature-curable organopolysiloxane composition containing
   (a) an organopolysiloxane containing silanol groups or silicon atom-bonded hydrolyzable groups and (b) an organosilicon compound containing silicon atom-bonded hydrolyzable groups,;

(B) 200-800 parts by weight of sand;

(C) 30-300 parts by weight of an inorganic filler;

(D) 5-50 parts by weight of an organic oil which is not compatible with the component (A);

(E) 5-50 parts by weight of an organopolysiloxane oil not containing silanol groups or silicon atom-bonded hydrolyzable groups.

2. A composition in accordance with Claim 1 wherein the organopolysiloxane (a) and the organosilicon (b) of component (A) are present in a ratios (a):(b) between about 100:1 and 100:20.

3. A composition in accordance with Claim 2 wherein the organopolysiloxane (a) and the organosilicon (b) of component (A) are present in a ratios (a):(b) between about 100:2 and 100:10.

4. A composition in accordance with Claim 1 wherein said organopolysiloxane (a) of component (A) is selected from the group consisting of: dimethylpolysiloxanes blocked by silanol groups at both ends; dimethylpolysiloxanes blocked by a silanol group at one end and a trimethylsiloxy group at the other end; dimethylpolysiloxanes blocked by methyldimethoxysiloxy groups at both ends; and combinations thereof.

5. A composition in accordance with Claim 1 wherein said organosilicon compound (b) of component (A) is selected from the group consisting of: methyltris(methyl ethyl ketoxime)silane; vinyltris(methyl ethyl ketoxime)silane; tetrakis(methyl ethyl ketoxime)silane; methyltrimethoxysilane; tetraethoxysilane; methyltris(N,N-diethylamino)silane; hydrolyzates of the aforesaid; and combinations thereof.

6. A composition in accordance with Claim 1 further comprising a condensation-accelerating catalyst.

7. A composition in accordance with Claim 6 wherein said condensation-accelerating catalyst is selected from the group consisting of: dibutyltin diacetate; dibutyltin dioctoate; dibutyltin dilaurate; dioctyltin dilaurate; zinc naphthenate; cobalt naphthenate; tin octoate; cobalt octoate; zirconium naphthenate; tetrabutyl orthotitanate; diethanolamine; triethanolamine; and combinations thereof.

8. A composition in accordance with Claim 1 wherein component (A) further comprises an additive selected from the group consisting of: methylpolysiloxane resins comprising $(CH_3)SiO_{3/2}$ units; methyl-polysiloxane resins comprising $(CH_3)_3SiO_{1/2}$ units and $SiO_{4/2}$ units; silane couplers; and combinations thereof.

9. A composition in accordance with Claim 1 wherein said inorganic filler (C) is selected from the group consisting of: calcium carbonate; silica; cement; kieselguhr; and combinations thereof.

10. A composition in accordance with Claim 1 wherein said organic oil is selected from the group consisting of: petrolatum; chlorinated paraffin; liquid paraffin; and combinations thereof.

11. A composition in accordance with Claim 1 wherein said organopolysiloxane oil (E) is selected from the group consisting of: trimethylsiloxy-blocked dimethylpolysiloxanes; dimethylsiloxanemethylphenylsiloxane copolymers; dimethylsiloxanediphenylsiloxane copolymers; 3,3,3-trifluoropropylmethylsiloxane-dimethylsiloxane copolymers; polyether-modified dimethylpolysiloxanes; and combinations thereof.

## Patentansprüche

1. Fäulnisverhindernde Unterwassermörtelzusammensetzung, umfassend
    (A) 100 Gew.-Teile einer bei Raumtemperatur härtbaren Organopolysiloxanzusammensetzung, die (a) ein Organopolysiloxan mit Silanolgruppen oder siliciumgebundenen hydrolysierbaren Gruppen und (b) eine Organosiliciumverbindung mit siliciumgebundenen hydrolysierbaren Gruppen enthält;
    (B) 200 bis 800 Gew.-Teile Sand;
    (C) 30 bis 300 Gew.-Teile anorganischen Füllstoff;
    (D) 5 bis 50 Gew.-Teile eines organischen Öls, das mit Komponente (A) nicht kompatibel ist;
    (E) 5 bis 50 Gew.-Teile Organopolysiloxanöl, das keine Silanolgruppen oder siliciumgebundenen hydrolysierbaren Gruppen enthält.

**2.** Zusammensetzung nach Anspruch 1, worin das Organopolysiloxan (a) und die Organosiliciumverbindung (b) von Komponente (A) in einem Verhältnis von (a):(b) von etwa 100:1 bis 100:20 vorhanden sind.

**3.** Zusammensetzung nach Anspruch 2, worin das Organopolysiloxan (a) und die Organosiliciumverbindung (b) von Komponente (A) in einem Verhältnis von (a):(b) von etwa 100:2 bis 100:10 vorhanden sind.

**4.** Zusammensetzung nach Anspruch 1, worin das Organopolysiloxan (a) von Komponente (A) ausgewählt ist aus der Gruppe bestehend aus Dimethylpolysiloxanen mit Silanolendgruppen an beiden Enden; Dimethylpolysiloxanen mit einer Silanolgruppe an einem Ende und einer Trimethylsiloxygruppe am anderen Ende; Dimethylpolysiloxanen mit Methyldimethoxysiloxygruppen an beiden Enden und Kombinationen davon.

**5.** Zusammensetzung nach Anspruch 1, worin die Organosiliciumverbindung (b) von Komponente (A) ausgewählt ist aus der Gruppe bestehend aus Methyltris(methylethylketoxim)silan, Vinyltris-(methylethylketoxim)silan, Tetrakis(methylethylketoxim)silan, Methyltrimethoxysilan, Tetraethoxysilan, Methyltris(N,N-diethylamino)silan, Hydrolysaten davon und Kombinationen davon.

**6.** Zusammensetzung nach Anspruch 1, weiter umfassend einen die Kondensationsreaktion beschleunigenden Katalysator.

**7.** Zusammensetzung nach Anspruch 6, worin der die Kondensationsreaktion beschleunigende Katalysator ausgewählt ist aus der Gruppe bestehend aus Dibutylzinndiacetat, Dibutylzinndioctoat, Dibutylzinndilaurat, Dioctylzinndilaurat, Zinknaphthenat, Kobaltnaphthenat, Zinnoctoat, Kobaltoctoat, Zirkoniumnaphthenat, Tetrabutylorthotitanat, Diethanolamin, Triethanolamin und Kombinationen davon.

**8.** Zusammensetzung nach Anspruch 1, worin Komponente (A) weiterhin ein Additiv umfaßt ausgewählt aus der Gruppe bestehend aus Methylpolysiloxanharzen mit $(CH_3)SiO_{3/2}$-Einheiten, Methylpolysiloxanharzen mit $(CH_3)_3SiO_{1/2}$-Einheiten und $SiO_{4/2}$-Einheiten, Silankupplungsmitteln und Kombinationen davon.

**9.** Zusammensetzung nach Anspruch 1, worin der anorganische Füllstoff (C) ausgewählt ist aus der Gruppe bestehend aus Calciumcarbonat, Siliciumdioxid, Zement, Kieselguhr und Kombinationen davon.

**10.** Zusammensetzung nach Anspruch 1, worin das organische Öl ausgewählt ist aus der Gruppe bestehend aus Petrolatum, chloriertem Paraffin, flüssigem Paraffin und Kombinationen davon.

**11.** Zusammensetzung nach Anspruch 1, worin das Organopolysiloxanöl (E) ausgewählt ist aus der Gruppe bestehend aus Dimethylpolysiloxanen mit Trimethylsiloxyendgruppen, Dimethylsiloxan-Methylphenylsiloxan-Copolymeren, Dimethylsiloxan-Diphenylsiloxan-Copolymeren, 3,3,3-Trifluorpropylmethylsiloxan-Dimethylsiloxan-Copolymeren, mit Polyether modifizierten Dimethylpolysiloxanen und Kombinationen davon.

**Revendications**

**1.** Une composition de mortier aquatique antisalissure comprenant :
(A) 100 parties en poids d'une composition d'organopolysiloxane durcissable à la température ambiante, contenant (a) un organopolysiloxane contenant des groupes silanol ou des groupes hydrolysables liés au silicium et (b) un composé organosilicié contenant des groupes hydrolysables liés au silicium ;
(B) 200 à 800 parties en poids de sable ;
(C) 30 à 300 parties en poids d'une charge minérale ;
(D) 5 à 50 parties en poids d'une huile organique qui n'est pas compatible avec le composant (A) ;
(E) 5 à 50 parties en poids d'une huile d'organopolysiloxane ne contenant pas de groupes silanol ni de groupes hydrolysables liés au silicium.

2. Une composition selon la revendication 1, dans laquelle l'orgànopolysiloxane (a) et le composé organosilicié (b) du composant (A) sont présents en un rapport (a):(b) compris entre environ 100:1 et 100:20.

3. Une composition selon la revendication 2, dans laquelle l'organopolysiloxane (a) et le composé organosilicié (b) du composant (A) sont présents en un rapport (a):(b) compris entre environ 100:2 et 100:10.

4. Une composition selon la revendication 1, dans laquelle ledit organopolysiloxane (a) du composant (A) est choisi dans le groupe formé par : les diméthylpolysiloxanes terminés par des groupes silanol aux deux extrémités ; les diméthylpolysiloxanes terminés par un groupe silanol à une extrémité et par un groupe triméthylsiloxy à l'autre extrémité ; les diméthylpolysiloxanes terminés par des groupes méthyldiméthoxysiloxy aux deux extrémités ; et des associations d'entre eux.

5. Une composition selon la revendication 1, dans laquelle ledit composé organosilicié (b) du composant (A) est choisi dans le groupe formé par : le méthyltris(méthyléthylcétoximo)silane ;le vinyltris-(méthyléthylcétoximo)silane ; le tétrakis(méthyléthylcétoximo)silane ; le méthyltriméthoxysilane ; le tétraéthoxysilane ; le méthyltris(N,N-diéthylamino)silane ; les hydrolysats des précédents ; et des associations d'entre eux.

6. Une composition selon la revendication 1, comprenant de plus un catalyseur accélérant la condensation.

7. Une composition selon la revendication 6, dans laquelle ledit catalyseur accélérant la condensation est choisi dans le groupe formé par : le diacétate de dibutylétain ; le dioctoate de dibutylétain ; le dilaurate de dibutylétain ; le dilaurate de dioctylétain ; le naphténate de zinc ; le naphténate de cobalt ; l'octoate d'étain ; l'octoate de cobalt ; le naphténate de zirconium ; l'orthotitanate de tétrabutyle ; la diéthanolamine ; la triéthanolamine ; et des associations d'entre eux.

8. Une composition selon la revendication 1 , dans laquelle le composant (A) comprend de plus un additif choisi dans le groupe formé par : les résines de méthylpolysiloxane comprenant des motifs $(CH_3)SiO_{3/2}$ ; les résines de méthylpolysiloxane comprenant des motifs $(CH_3)_3SiO_{1/2}$ et des motifs $SiO_{4/2}$ ; les agents de couplage du type silane ; et des associations d'entre eux.

9. Une composition selon la revendication 1, dans laquelle ladite charge minérale (C) est choisie dans le groupe formé par : le carbonate de calcium ; la silice ; du ciment ; le kieselguhr ; et des associations d'entre eux.

10. Une composition selon la revendication 1, dans laquelle ladite huile organique est choisie dans le groupe formé par : le pétrolatum ; une paraffine chlorée ; l'huile de paraffine ; et des associations d'entre eux.

11. Une composition selon la revendication 1, dans laquelle ladite huile d'organopolysiloxane (E) est choisie dans le groupe formé par : les diméthylpolysiloxanes bloqués par des motifs triméthylsiloxy ; les copolymères diméthylsiloxane-méthylphénylsiloxane ; les copolymères diméthylsiloxane-diphénylsiloxane ; les copolymères 3,3,3-trifluoropropylméthylsiloxane-diméthylsiloxane ; les diméthylpolysiloxanes modifiés par un polyéther ; et des associations d'entre eux.